# EUROPEAN PATENT SPECIFICATION

(11) **EP 1 926 397 B1**
(45) Date of publication and mention of the grant of the patent: **08.12.2010**
(21) Application number: 06783951.4
(22) Date of filing: 21.08.2006
(51) Int. Cl.: A23L 1/317, A22C 11/00

(54) **METHOD AND DEVICE FOR SUBJECTING CO-EXTRUDED FOOD PRODUCTS TO AN AIRFLOW IN TWO PHASES**
VERFAHREN UND EINRICHTUNG, UM GEMEINSAM EXTRUDIERTE NAHRUNGSMITTELPRODUKTE EINEM LUFTSTROM IN ZWEI PHASEN ZU UNTERWERFEN
PROCEDE ET DISPOSITIF POUR SOUMETTRE DES PRODUITS ALIMENTAIRES COEXTRUDES A UN FLUX D'AIR EN DEUX PHASES

(30) Priority: 12.09.2005 NL 1029931
(43) Date of publication of application: 04.06.2008
(60) Divisional application: 10182043.9
(73) Proprietor: Stork Townsend B.V., 5349 AE Oss (NL)
(72) Inventor: BONTJER, Marcus, Bernhard, Hubert, NL-5735 CS Aarle Rixtel (NL); MEGGELAARS, Sigebertus, Johannes, Jacobus, Jozef, NL-5643 PM Eindhoven (NL); THOONSEN, Paulus, Johanus, Maria, NL-5261 AD Vught (NL); VAN DEN BERG, Kasper, Willem, NL-5345 ZP Oss (NL)
(74) Representative: Van den Heuvel, Henricus Theodorus
(86) International application number: PCT/NL2006/050205
(87) International publication number: WO 2007/032678

(56) References cited:
- WO-A-95/28090
- WO-A-99/55165
- NL-C- 1 007 039
- US-B1- 6 419 968

## Description

The present invention relates to a method for manufacturing co-extruded food products, comprising the processing steps of: A) co-extruding an elongate dough strand and a casing enclosing the elongate dough strand to form a non-coagulated food product, B) bringing the casing into contact with a salt solution, and C) dividing the encased elongate food strand into individual products, whereafter the co-extruded food products are subjected to an airflow. The invention also relates to a device for manufacturing co-extruded food products, comprising: co-extrusion means for simultaneously manufacturing an elongate dough strand and a casing enclosing the elongate dough strand, supply means for supplying a salt solution to the co-extruded food product, separating means for dividing the encased elongate food product into individual products, and drying means provided with a means for generating an airflow disposed in a drying space.

In the co-extrusion of food products dough is extruded from a nozzle such that an elongate dough strand is formed. Simultaneously with the extrusion of the dough strand a skin (casing) is arranged, likewise by means of the extrusion, around the dough strand of a material suitable for this purpose, usually a collagen mixture or an alginate mixture. Food products (in particular sausages) are thus manufactured by means of the simultaneous extrusion (co-extrusion). The food products usually consist of meat products, but it is also possible to manufacture vegetarian products with a non-animal casing in this manner. The material with which the casing is manufactured is viscous immediately after arranging thereof around the dough strand. In order to give the casing some strength so that subsequent treatment and process steps are possible, it is desirable to extract water from the casing as quickly as possible such that it obtains a mechanical strength. For this purpose the casing is usually brought into contact with a salt solution immediately after extrusion so as to have the casing acquire a stronger structure; such a process of strengthening the casing can for instance consist of precipitation, "crosslinking" and/or gelling (this latter process takes place particularly in the case of an alginate mixture). Following the first strengthening process, the extrusion product can be divided up ("brought to length") by a separator, for instance a crimper or a linker. After separation the divided extrusion products are usually placed in a drying space where the casing is stabilized further by means of drying. After drying, the products can be taken out of the drying space and, in the case of preparation of smoked food products, brought into contact with a smoke extract or natural smoke. It can occur that the thus smoked food products are then fed back again to the drying space for further stabilization of the products. Such a process is described inter alia in NL 1007039. The prior art drying means are very voluminous and consume much energy. This results in a normal duration of stay in the drying means of about 24 minutes for an extrusion product with a diameter of 24 mm, this at a temperature usually lying between 65°C and 90°C.

The US patent 6,419,968 discloses a method and apparatus for producing sausage by coextruding sausage paste and a collagen to form a continuous sausage body having an outer tube comprising collagen in surrounding relation to the sausage paste. The continuous sausage body is subsequently separated into individual sausage links, placed in baskets to be transported with and endless belt through an enclosure. In the enclosure the sausages are heated to cook the sausages and also treated with natural smoke. In a preferred embodiment (shown in figure 8 of the patent) the enclosure comprises three drying compartments wherein the sausages are dried at various elevated temperatures.

The international patent application WO 95/28090 discloses a method and apparatus for continuously processing an elongated strand of plastic edible material coated with a coagulation coating. For the drying of the products a surface dryer is presented, with the casing directly being irradiated by a radiation source. The moisture which is removed out of the casing is conducted away with the help of conditioned airflow. The temperature of drying can be controlled with an infrared or IR radiator, to provide the energy for vaporizing the moisture in the casing. Such drying is combined with an air flow for moisture transport.

The present invention has for its object to provide a simple method and device with which co-extruded food products can be dried in quicker and readily controllable manner relative to the prior art.

The invention provides for this purpose a method according to claim 1. The food products are subjected to two successive airflows physically separated from each other, wherein the process conditions of the airflows can be controlled independently of each other, and the food products are still not fully coagulated after passing through the airflows. The successive airflows herein define separate drying phases which can be controlled independently of each other. By thus separating the airflow treatments, or the drying process, into two sub-processes which can be controlled wholly independently, with successive phases characterized by separate airflows conditioned independently of each other, it is possible to further optimize the sub-processes. This must be seen as including improved control of process conditions such as temperature, air humidity, flow speed, distribution of airflow over the space and so forth. A more specific example of more readily controllable process conditions is the avoidable temperature drop between the successive airflow treatments. This has been found in preliminary practical tests to already result in a saving of 33% in the total time duration of the drying process (at a drying time according to the prior art of 24 minutes for extrusion products having a diameter of 24 mm) to a drying time of a total of 16 minutes according to the present invention (wherein 10 minutes of first drying and 6 minutes of second drying). That both processing steps are for instance drying steps, which are distinguished from heat treatment of the products such as for instance in a cooking treatment, is elucidated by specifying that the products are still not fully coagulated, even after passing through both processing steps.

At least one of the airflows has an horizontal flow direction. The advantage of such a horizontal flow direction is that the extrusion products can thus also be displaced substantially horizontally in a counterflow direction. This measure also results in an improved controllability of the process conditions of the airflows. With a more vertical flow direction of an airflow, convection will for instance be able to have a greater (disruptive) effect on the process conditions. A horizontal airflow also makes it possible to give the associated equipment a more compact, i.e. less high, form. A limited height of the equipment has the advantage that this increases flexibility in respect of the deployment of the equipment.

Favourable results are achieved at an initial temperature of the airflow during at least one of the successive drying phases of at least 70°C, preferably at least 85°C and even more preferably at least 95°C. Depending on the other process conditions, it is even possible to dry at an initial temperature of the airflow of at least 100°C.

Particularly when a casing of collagen is applied, it is desirable to maximize the initial temperature of the airflow during at least one of the successive drying phases at 125°C, preferably at a maximum of 115°C. The cause hereof is that the chemical stability of a collagen casing disappears when such a temperature is exceeded. If use is made of a casing of alginate, such a restriction of the temperature range does not however apply.

The food products not being completely coagulated after passing through each of the drying phases is understood to mean that the core temperature of the extrusion product remains below 60°C. At least such a temperature is required to cause the proteins of the extrusion product to coagulate. In other words: the dough strand is not yet heated such that it is fully cooked or boiled. To nevertheless allow the dough strand to coagulate, the co-extruded food products can be heated, after passing through the two successive drying phases, such that they are completely coagulated. Examples hereof are for instance: canning the products and then sterilizing the content thereof, heating the products after they are packed in a foil packaging; also referred to as "cook in pack", and cooking unpackaged extrusion products by means of steam in a so-called steam cooker.

In addition to air temperature, another important process condition is the air humidity. In respect of this variable it is desirable that at least one of the airflows has at the start of the drying process an air humidity of less than 25 grams of water per kilogram of air. Even better drying results can be achieved at an air humidity of less than 20 or 15 grams of water per kilogram of air. It is also advantageous when this is the case for both drying phases. Yet another advantageous process condition is that the average flow speed of at least one of the airflows is at least 3 m/s. Average flow speeds of more than 4 or 5 metre/second can also be applied in practice. At such higher average flow speeds a more rapid exchange takes place between the extrusion product and the airflow.

Another possibility provided by the present invention is that, owing to the separated drying phases, a treatment can be performed on the co-extruded food products between the two phases, for instance a liquid treatment such as a treatment of the food products with liquid smoke, aldehyde, a "cross-linker" and/or natural smoke.

The present invention also provides a device for manufacturing co-extruded food products according to claim 10, with the feature that the drying means comprise two mutually separated drying spaces, both provided with means which can be controlled independently of each other for generating airflows. The separate drying spaces and the respective means for generating airflows associated with the drying spaces are herein assembled to form two separate units. It is herein desirable that these units are each also provided with means for conditioning the air. For the advantages of such a device reference is made to the advantages already stated above in respect of the method according to the present invention. In addition, the division of the drying means into different separate units provides a number of advantages in the transport and construction of the drying means, and they can also be given a compact form such that fewer, or no, modifications are required in the architecture of the normal production areas.

In the device at least one of the drying spaces is provided with an horizontal flow channel for the passage of the airflow. Such a device can be given a compact (low) form such that it can usually be accommodated in existing buildings without architectural modifications having to be made. Such relatively simple placing is particularly possible if the device has a maximum height of less than 4.5 metres.

The present invention will be further elucidated on the basis of the non-limitative exemplary embodiments shown in the following figures. Herein:
figure 1 shows a schematic perspective view of a co-extrusion device according to the present invention, and
figure 2 shows a schematic top view of an alternative embodiment variant of a co-extrusion device according to the present invention.

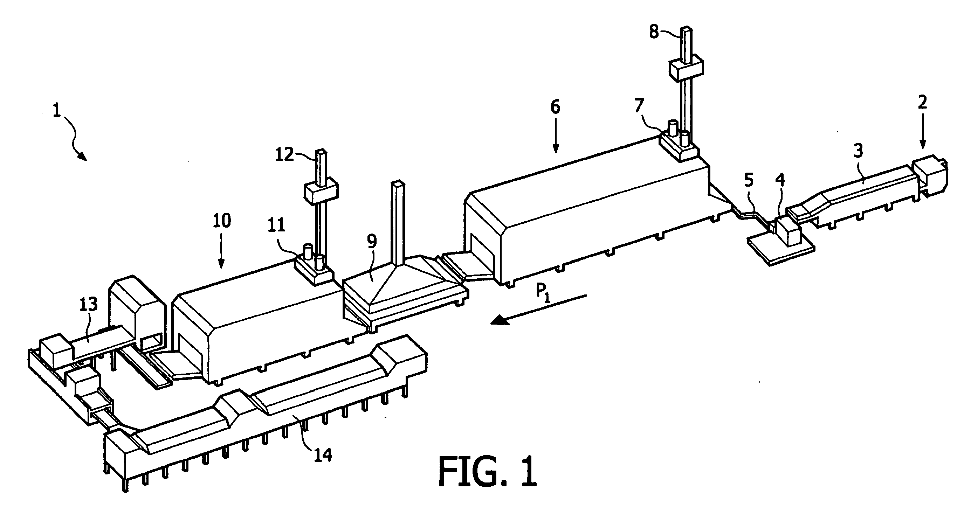

Figure 1 shows a co-extrusion device 1 according to the invention with a co-extrusion nozzle 2, a brining bath 3 (provided with a separating unit which is not shown), a transfer means 4 and a conveyor track 5 for singulated products. The product flow is as according to arrow P₁. In a first drying unit 6 the products are then dried using conditioning means 7, forming part of first drying unit 6, for air drawn in using an air feed 8. After passing through first drying unit 6, the products enter a smoking unit 9 where the products are treated with a liquid smoke extract. A second drying unit 10 is disposed connecting onto smoking unit 9. This second drying unit 10 is very similar to first drying unit 6 and is likewise provided with conditioning means 11 for air drawn in using air feed 12. It will be apparent that first drying unit 6 and second drying unit 10 are completely separated from each other, and that the drying processes in the two drying units 6, 10 need not influence each other in any way whatever. After passing through second drying unit 10, the dried products enter a packaging device 13 and subsequently undergo a further (heat) treatment in a heating line 14.

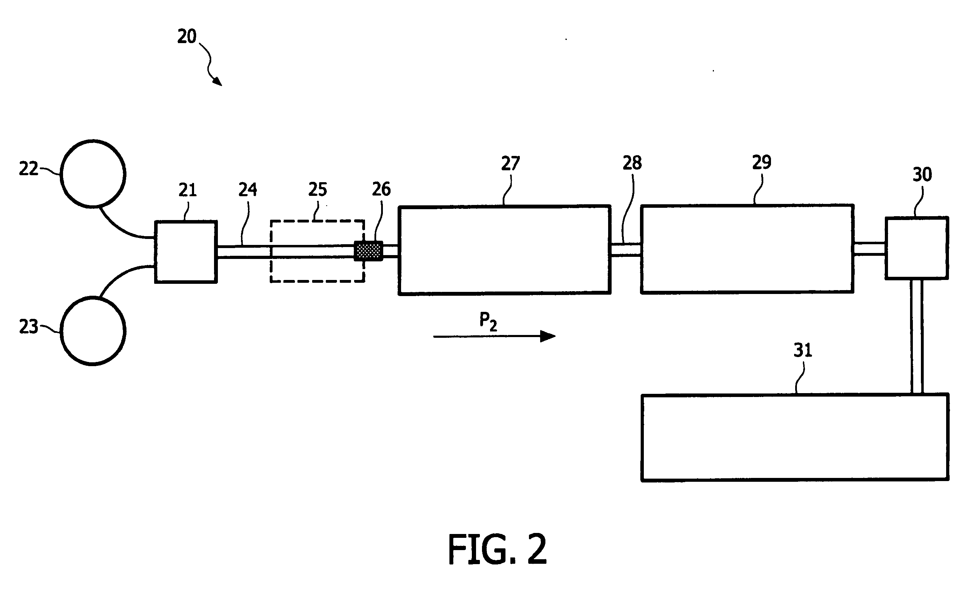

Figure 2 shows a co-extrusion device 20 according to the invention, in which food products are displaced as according to arrow P₂. A co-extrusion nozzle 21 is fed by a supply container 22 for meat dough and a supply container 23 for casing material. A co-extruded food strand is carried over a conveyor track 24 through a brining bath 25 and then separated by a crimper wheel 26. After being singulated, the products enter a first drying unit 27 which, via a conveyor track 28, is connected to a second drying unit 29 placed at a distance. After the products have also left second drying unit 29, they enter a packaging device 30 in order to undergo a finishing treatment in a processing line 31.

## Claims

1. Method for manufacturing co-extruded food products, comprising the processing steps of:
A) co-extruding an elongate dough strand and a casing enclosing the elongate dough strand to form a non-coagulated food product,
B) bringing the casing into contact with a salt solution, and
C) dividing the encased elongate food strand into individual products, and subjecting the co-extruded food products airflows of which successive airflows the process conditions are independently of each other controllable to define independent and separate drying phases, wherein
at least one of the airflows has an horizontal flow direction the food products are after dividing the encased elongate food strand into individual products subjected to two successive drying airflows physically separated from each other, while the food products are still not fully coagulated after passing through the airflows,

2. Method as claimed in claim 1, **characterised in that** the flow speed of at least one of the airflows is at least 3 m/s.

3. Method as claimed in any of the foregoing claims, **characterized in that** the initial temperature of the airflow during at least one of the successive drying phases is at least 70°C, preferably at least 85°C.

4. Method as claimed in any of the foregoing claims, **characterized in that** the initial temperature of the airflow during at least one of the successive phases is a maximum of 125°C, preferably a maximum of 115°C.

5. Method as claimed in any of the foregoing claims, **characterized in that** the core temperature of the dough strand is less than 60°C after passing through each of the drying phases.

6. Method as claimed in any of the foregoing claims, **characterized in that** at least one of the airflows consists of an airflow with an air humidity of less than 25 grams of water per kilogram of air.

7. Method as claimed in any of the foregoing claims, **characterized in that** a treatment is performed on the co-extruded food products between two successive drying phases.

8. Method as claimed in claim 7, **characterized in that** the treatment performed between two successive drying phases is a liquid treatment.

9. Method as claimed in any of the foregoing claims, **characterized in that** the co-extruded food products are heated after passing through the two successive drying phases such that they are fully coagulated.

10. Device (1, 20) for manufacturing co-extruded food products, comprising:
- co-extrusion means (2, 21, 22, 23) for simultaneously manufacturing an elongate dough strand and a casing enclosing the elongate dough strand,
- supply means (3, 25) for supplying a salt solution to the co-extruded food product,
- separating means (26) for dividing the encased elongate food product into individual products, and
- drying means (6, 10, 27, 29) provided with a means (7, 8; 11, 12) for generating an airflow disposed in a drying space (6, 10, 27, 29) comprising an horizontal flow channel for passage of the airflow, wherein
the drying means (6, 10, 27, 29) located behind the separating means (7,8; 11, 12) comprise two mutually separated drying spaces, both provided with means (7, 8; 11, 12) which can be controlled independently of each other for generating independent airflows.

11. Device (1, 20) as claimed in claim 10, **characterized in that** the separate drying spaces (6, 10, 27, 29) and the respective means (7, 8; 11, 12) for generating airflows associated with the drying spaces (6, 10, 27, 29) are assembled into two separate units (6, 10, 27, 29).

12. Device(1, 20) as claimed in claims 10 or 11, **characterized in that** the device (1, 20) has a maximum height which is less than 4.5 metres.

13. Device (1, 20) as claimed in any of the claims 10-12, **characterised in that** the means (7, 8; 11, 12) for generating an airflow in at least one of the drying spaces (6, 10, 27, 29) are adapted to generate an airflow of at least 3 m/s.

## Patentansprüche

1. Verfahren zur Herstellung koextrudierter Lebensmittelprodukte, das folgende Verarbeitungsschritte umfasst:
A) Die Koextrusion eines verlängerten Teigstrangs und eines Mantels, der den verlängerten Teigstrang umhüllt, um ein nicht koaguliertes Lebensmittelprodukt zu formen,
B) das Inkontaktbringen des Mantels mit einer Salzlösung, und
C) das Teilen des ummantelten verlängerten Lebensmittelstrangs in einzelne Produkte, wobei die koextrudierten Lebensmittelprodukte aufeinanderfolgenden Luftströmen ausgesetzt werden und die Prozessbedingungen unabhängig voneinander steuerbar sind, um unabhängige und separate Trockenphasen zu definieren, wobei die Lebensmittelprodukte nach der Teilung des ummantelten verlängerten Lebensmittelstrangs in einzelne Produkte zwei aufeinanderfolgenden Luftströmen ausgesetzt werden, die physikalisch voneinander getrennt sind, wobei die Lebensmittelprodukte noch nicht vollständig koaguliert sind, nachdem sie den Luftströmen ausgesetzt waren, und wobei mindestens ein Luftstrom eine horizontale Fließrichtung aufweist.

2. Verfahren nach Anspruch 1, **dadurch gekennzeichnet, dass** die Fließgeschwindigkeit von mindestens einem der Luftströme mindestens 3 m/s beträgt.

3. Verfahren nach einem der oben genannten Ansprüche, **dadurch gekennzeichnet, dass** die Anfangstemperatur des Luftstroms während mindestens einer der aufeinanderfolgenden Trockenphasen mindestens 70°C, vorzugsweise mindestens 85°C, beträgt.

4. Verfahren nach einem der oben genannten Ansprüche, **dadurch gekennzeichnet, dass** die Anfangstemperatur des Luftstroms während mindestens einer der aufeinanderfolgenden Phasen höchstens 125°C, vorzugsweise höchstens 115°C, beträgt.

5. Verfahren nach einem der oben genannten Ansprüche, **dadurch gekennzeichnet, dass** die Kerntemperatur des Teigstrangs nach Durchlaufen der Trockenphasen unter 60°C beträgt.

6. Verfahren nach einem der oben genannten Ansprüche, **dadurch gekennzeichnet, dass** mindestens einer der Luftströme aus einem Luftstrom mit einer Luftfeuchtigkeit von unter 25 Gramm Wasser pro Kilogramm Luft besteht.

7. Verfahren nach einem der oben genannten Ansprüche, **dadurch gekennzeichnet, dass** die koextrudierten Lebensmittelprodukte zwischen zwei aufeinanderfolgenden Trockenphasen einer Bearbeitung unterzogen werden.

8. Verfahren nach Anspruch 7, **dadurch gekennzeichnet, dass** die zwischen den aufeinanderfolgenden Trockenphasen durchgeführte Bearbeitung eine flüssige Bearbeitung ist.

9. Verfahren nach einem der oben genannten Ansprüche, **dadurch gekennzeichnet, dass** die koextrudierten Lebensmittelprodukte nach Durchlaufen der beiden aufeinanderfolgenden Trockenphasen erhitzt werden, so dass sie vollständig koagulieren.

10. Vorrichtung (1, 20) zur Herstellung koextrudierter Lebensmittelprodukte, das Folgendes umfasst:
- Koextrusionsmittel (2, 21, 22, 23) zur gleichzeitigen Herstellung eines verlängerten Teigstrangs und eines Mantels, der den verlängerten Teigstrang umhüllt,
- Versorgungsmittel (3, 25) zur Bereitstellung einer Salzlösung für das koextrudierte Lebensmittelprodukt,
- Trennmittel (26) zum Teilen des ummantelten verlängerten Lebensmittelprodukts in einzelne Produkte, und
- Trocknungsmittel (6, 10, 27, 29) mit Mitteln (7, 8, 11, 12) zur Erzeugung eines Luftstroms in einem Trocknungsraum (6, 10, 27, 29), der einen horizontalen Fließkanal zum Durchfließen des Luftstroms umfasst, wobei
die hinter den Trennmitteln (7, 8, 11, 12) angeordneten Trocknungsmittel (6, 10, 27, 29) zwei gegenseitig getrennte Trocknungsräume umfassen, die beide über Mittel (7, 8, 11, 12) verfügen, die unabhängig voneinander steuerbar sind, um unabhängige Luftströme zu erzeugen.

11. Vorrichtung (1, 20) nach Anspruch 10, **dadurch gekennzeichnet, dass** die getrennten Trocknungsräume (6, 10, 27, 29) und die entsprechenden Mittel (7, 8, 11, 12) zur Erzeugung der Luftströme in Verbindung mit den Trocknungsräumen (6, 10, 27, 29) in zwei getrennten Einheiten (6, 10, 27, 29) angeordnet sind.

12. Vorrichtung (1, 20) nach einem der Ansprüche 10 oder 11, **dadurch gekennzeichnet, dass** die Vorrichtung (1, 20) eine maximale Höhe von unter 4,5 m aufweist.

13. Vorrichtung (1, 20) nach einem der Ansprüche 10-12, **dadurch gekennzeichnet, dass** die Mittel (7, 8, 11, 12) zur Erzeugung eines Luftstroms in mindestens einem der Trocknungsräume (6, 10, 27, 29) angepasst sind, um einen Luftstrom von mindestens 3 m/s zu erzeugen.

## Revendications

1. Procédé de fabrication de produits alimentaires coextrudés, comprenant les étapes de traitement consistant :
A) à coextruder un cordon allongé de pâte et un enrobage enveloppant le cordon allongé de pâte pour former un produit alimentaire non coagulé ;
B) à mettre l'enrobage en contact avec une solution saline, et
C) à diviser le cordon alimentaire allongé enrobé en produits individuels et à soumettre les produits alimentaires coextrudés à des flux d'air, les conditions de traitement de flux d'air successifs étant régulables indépendamment les unes des autres pour définir des phases de séchage indépendantes et séparées,
étant entendu que les produits alimentaires sont, après la division du cordon alimentaire allongé enrobé en produits individuels, soumis à deux flux d'air de séchage successifs physiquement séparés l'un de l'autre tandis que les produits alimentaires ne sont pas encore complètement coagulés après être passés dans les flux d'air, et étant entendu qu'au moins l'un des flux d'air a un sens d'écoulement horizontal.

2. Procédé selon la revendication 1, **caractérisé en ce que** la vitesse d'écoulement d'au moins l'un des flux d'air est d'au moins 3 m/s.

3. Procédé selon l'une quelconque des revendications précédentes, **caractérisé en ce que** la température initiale du flux d'air pendant au moins l'une des phases successives de séchage est d'au moins 70 °C, de préférence d'au moins 85 °C.

4. Procédé selon l'une quelconque des revendications précédentes, **caractérisé en ce que** la température initiale du flux d'air pendant au moins l'une des phases successives de séchage est au maximum de 125 °C, de préférence au maximum de 115°C.

5. Procédé selon l'une quelconque des revendications précédentes, **caractérisé en ce que** la température au coeur du cordon de pâte est inférieure à 60 °C après qu'il est passé par chacune des phases de séchage.

6. Procédé selon l'une quelconque des revendications précédentes, **caractérisé en ce qu'**au moins l'un des flux d'air consiste en un flux d'air dont l'humidité de l'air est inférieure à 25 grammes d'eau par kilogramme d'air.

7. Procédé selon l'une quelconque des revendications précédentes, **caractérisé en ce qu'**un traitement est réalisé sur les produits alimentaires coextrudés entre deux phases successives de séchage.

8. Procédé selon l'une quelconque des revendication 7, **caractérisé en ce que** le traitement réalisé entre deux phases successives de séchage est un traitement liquide.

9. Procédé selon l'une quelconque des revendications précédentes, **caractérisé en ce que** les produits alimentaires coextrudés sont chauffés après être passés par les deux phases successives de séchage de telle sorte qu'ils soient complètement coagulés.

10. Dispositif (1, 20) pour fabriquer des produits alimentaires coextrudés, comprenant :
- des moyens de coextrusion (2, 21, 22, 23) pour fabriquer simultanément un cordon de pâte allongé et un enrobage enveloppant le cordon de pâte allongé ;
- des moyens d'amenée (3, 25) pour amener une solution saline jusqu'au produit alimentaire coextrudé ;
- des moyens de séparation (26) pour diviser le produit alimentaire allongé enrobé en produits individuels, et
- des moyens de séchage (6, 10, 27, 29) pourvu d'un moyen (7, 8 ; 11, 12) pour produire un flux d'air disposé dans un espace de séchage (6, 10, 27, 29) comprenant un canal d'écoulement horizontal pour le passage du flux d'air,
étant entendu que les moyens de séchage (6, 10, 27, 29) situés derrière les moyens de séparation (7, 8 ; 11, 12) comprennent deux espaces de séchage mutuellement séparés, pourvus tous les deux de moyens (7, 8 ; 11, 12) qui peuvent être régulés indépendamment l'un de l'autre pour produire des flux d'air indépendants.

11. Dispositif (1, 20) selon la revendication 10, **caractérisé en ce que** les espaces de séchage séparés (6, 10, 27, 29) et les moyens respectifs (7, 8 ; 11, 12) pour produire des flux d'air associés aux espaces de séchage (6, 10, 27, 29) sont assemblés en deux unités séparées (6, 10, 27, 29).

12. Dispositif (1, 20) selon la revendication 10 ou 11, **caractérisé en ce que** le dispositif (1, 20) a une hauteur maximale qui est inférieure à 4,5 mètres.

13. Dispositif (1, 20) selon l'une quelconque des revendications 10-12, **caractérisé en ce que** les moyens (7, 8 ; 11, 12) pour produire un flux d'air dans au moins l'un des espaces de séchage (6, 10, 27, 29) sont adaptés pour produire un flux d'air d'au moins 3 m/s.
